# EUROPEAN PATENT APPLICATION

(11) **EP 4 563 870 A1**
(43) Date of publication of application: **04.06.2025**
(21) Application number: 24209703.8
(22) Date of filing: 30.10.2024
(51) Int. Cl.: F16M 7/00

(54) **SUPPORT DEVICE**

(30) Priority: 29.11.2023 EP 23213157
(71) Applicant: Tetra Laval Holdings & Finance S.A., 1009 Pully (CH)
(72) Inventor: Riansyah, Selly, 12510 Jakarta (ID)
(74) Representative: Tetra Pak - Patent Attorneys SE

(57) **Abstract**

A support device (100) for processing equipment, the support device (100) comprising: a base plate (107), a top plate (101), an intermediate structure (110) having a lower part (112) and an upper part (113) and extending between the base plate (107) and the top plate (101), wherein the lower part (112) is attached to the base plate (107) at a first end thereof and is connected to the upper part (113) via threads (114, 115) at a second end thereof, wherein the top plate (101) is freely arranged on the upper part (113), and wherein the intermediate structure (110) is configured to move the top plate (101) in a vertical direction (y) in response to rotational motion of the upper part (113) relative the lower part (112); and a connector structure (120) having a base element (125a), a top element (125b) and a connection bar (126) and extending between the base plate (107) and the top plate (101), and wherein the connector structure (120) is configured to enable movement of the top plate (101) in a first horizontal direction (z).

## Description

### Technical Field

The invention generally relates to a support device for supporting a processing equipment. More particularly, the invention relates to a support device which comprises a base plate, a top plate, an intermediate structure and a connector structure for supporting the processing equipment.

### Background

It is commonly known to use different types of processing equipment in the food processing industry. This equipment is typically used for processing food products or beverages and making the food products and beverages ready for distribution. This equipment is typically installed all over the world. The equipment needs to be designed to meet different criteria depending on where in the world the equipment is installed, i.e. the equipment may need to be able to withstand big loads, vibrations or other external influences. The equipment may also need to be able to be installed in an easy and efficient way.

Even through processing equipment for processing food products and beverages has been used in the food and beverage processing industry for decades, there is room for improvements for obtaining more flexible and robust processing equipment.

For these reasons, there is a demand for processing equipment which is flexible and robust at the same time as being easy and efficient to install.

### Summary

It is an object to at least partly overcome one or more of the above-identified limitations of the prior art. In particular, it is an object to provide a support device for processing equipment which improves the functionalities of the processing equipment, such as providing a more flexible and/or robust processing equipment. According to embodiments of the disclosure, other objects may be to facilitate installation of the processing equipment, such that the processing equipment may be installed in an easy and efficient way.

According to a first aspect, a support device for supporting a processing equipment is provided. The support device comprising:
a base plate configured to be attached to a ground;
a top plate configured to support the processing equipment;
an intermediate structure having a lower part and an upper part and extending between the base plate and the top plate, wherein the lower part is attached to the base plate at a first end thereof and is connected to the upper part via threads at a second end thereof, wherein the top plate is freely arranged on the upper part, and wherein the intermediate structure is configured to move the top plate in a vertical direction in response to rotational movement of the upper part relative the lower part; and
a connector structure having a base element, a top element and a connection bar and extending between the base plate and the top plate, wherein the base element is attached to the base plate, the top element is attached to the top plate and the connection bar is connected to and extending between the base element and the top element, and wherein the connector structure is configured to enable movement of the top plate in a first horizontal direction.

As readily appreciated by the person skilled in the art, the support device is for installing the processing equipment to the ground in an easy and efficient way. The support device is also for attaching the processing equipment to the ground in a flexible and robust way. Thus, the support device may form an intermediate part arranged between the ground at which the processing equipment is arranged and the processing equipment itself.

With the disclosed design, the support device enables movement of the top plate, by which the processing equipment is supported, in the vertical direction and the first horizontal direction. As a consequence, the support device enables movements of the processing equipment in the vertical direction and in the first horizontal direction. This is advantageous in that it provides structural flexibility in preferably the first horizontal direction and thereby accepting size changes which may result from thermal expansions. Thus, the first horizontal direction may be referred to as an expansion direction, being the direction in which the thermal expansion typically occurs. This is further advantageous in that it provides a level flexibility in preferably the vertical direction. The level flexibility may preferably be provided when attaching the processing equipment to the ground for the first time. However, it should be noted that the level flexibility may be provided on other occasions as well.

Preferably, the processing equipment is for processing food product or beverage. By way of example, the processing equipment may be a pressure vessel, a non-pressure vessel or any other processing equipment known in the art. The processing equipment may comprise one or more feet. The base plate is preferably fixedly attached to the ground. By way of example, the base plate may be bolted to the ground. The top plate is preferably fixedly attached to the processing equipment. By way of example, the top plate may be bolted or welded to the processing equipment, and preferably to the foot of the equipment if any. Thus, if the processing equipment comprises the one or more feet, each foot may be supported by a respective support device. Hence, if the processing equipment comprises four feet, there is four support devices which support the processing equipment at the same time.

The lower part is preferably fixedly attached to the base plate. By way of example, the lower part may be bolted or welded to the base plate. The lower part and the base plate may be formed as one piece. As said, the top plate is freely arranged on the upper part. This may be referred to as the top plate is floating on the upper part. By way of example, the upper part may be a ball feet or a tank feet.

The base element is preferably fixedly attached to the base plate. By way of example, the base element may be bolted or welded to the base plate. The top element is preferably fixedly attached to the top plate. By way of example, the top element may be bolted or welded to the top plate.

As said above, when the support device supports the processing equipment, it is possible to adjust the processing equipment in the vertical direction. Thus, the intermediate structure of the support device is configured to move the top plate in the vertical direction, which consequently will move the processing equipment in the vertical direction. The lower part may be provided with external threads or internal threads. The upper part may be provided with external threads or internal threads. The lower part is provided with external threads or internal threads and the upper part is provided with the opposite threads. Preferably, the lower part is provided with external threads and the upper part is provided with internal threads. In this context, threads may be interpreted as inclined surfaces or threads, wherein the top plate is moved in response to rotational movement of the upper part relative to the lower part. Thus, the intermediate structure is configured to move the top plate in the vertical direction by converting rotational movement into linear movement. This is advantageous as it enables adjusting the position of the processing equipment in the vertical direction. This is further advantageous in that the processing equipment may be installed in an easy and efficient way. This is especially advantageous once the processing equipment is arranged on ground which is not substantially horizontally arranged. By way of example, the intermediate structure may be able to move the top plate a distance which is equal to about half the height of the threads.

As said above, when the support device supports the processing equipment, it enables movement of the top plate in the first horizontal direction. Thus, the connector structure of the support device is configured to enable movement of the top plate in the first horizontal direction, which consequently will enable movement of the processing equipment in the first vertical direction. The connector structure is also configured to control a position of the top plate in response to movements of the top plate. This is especially advantageous in response to thermal expansion since the thermal expansion typically occurs in the first horizontal direction. Preferably, the first horizontal direction passes through a center axis of the processing equipment.

With the disclosed design, the combination of the intermediate structure and the connector structure is also advantageous in that it enables movement in the vertical direction and in the first horizontal direction due to vibrations, such as earthquakes or the like. With the present design, the combination of the intermediate structure and the connector structure provides for a flexible and robust device. The present design enables movement in both the vertical direction and in the first horizontal direction as well as controlling the movement in the respective direction.

The base element and the connection bar may define a horizontal clearance therebetween and/or wherein the top element and the connection bar may define a horizontal clearance therebetween to enable movement of the top plate in the first horizontal direction. This is advantageous in that the movement of the top plate in the first horizontal direction is enabled in a flexible and efficient way. This is further advantageous in that the movement in the first horizontal direction may be controlled in a flexible and efficient way. Thus, the clearance between the base element and the connection bar and/or the clearance between the top element and the connection bar may define a distance which the top plate may be allowed to be moved in the first horizontal direction.

The connector structure may be configured to enable movement of the top plate in the first horizontal direction by a distance within the range of 2-8 mm. With this design, a structural flexibility is provided in the support device, i.e. the support device allows some movements, namely 2-8 mm, in the first horizontal direction. Thus, if there is a clearance defined between the base element and the connection bar and a clearance defined between the top element and the connection bar, the two clearances may have a total extension within the range of 2-8 mm. If there is a clearance defined between the base element and the connection bar or a clearance defined between the top element and the connection bar, the clearance may have an extension within the range of 2-8 mm.

The support device may further comprise a bracket arrangement attached to the top plate, wherein the upper part may extend through the bracket arrangement. The bracket arrangement may be configured to control movement of the top plate during external influences or big movements, i.e. vibrations as a result from earthquakes or the like. The bracket arrangement is preferably configured to limit horizontal movements of the top plate during big movements. Thus, the bracket arrangement is configured to enable horizontal movements of the top plate but also to control the horizontal movements of the top plate. This is advantageous in that a flexible control arrangement is provided. The bracket arrangement is preferably configured to control the movements when the connector structure is not strong enough, i.e. when loads on the structure device is too big for the connector structure to handle. The connector structure is designed to withstand a first amount of horizontal forces. The bracket arrangement is designed to withstand a second amount of horizontal forces, being greater than the first amount. Therefore, the bracket arrangement may be stronger in the sense of withstanding horizontal forces than the connector structure. This is advantageous in that a stable and secure structure is provided also when the support device is exposed to big external influences. However, it should be noted that during normal conditions, the connector structure is typically strong enough to withstand the horizontal forces. During normal conditions, there is no contact between the upper part and the bracket arrangement. Thus, during normal conditions, the upper part extends through the bracket arrangement without touching, or being in contact with, the upper part.

In this context, wherein the upper part extends through the bracket arrangement, should be interpreted as the bracket arrangement at least partly surrounds the upper part. It should also be understood by the skilled person that the upper part and the bracket arrangement is arranged in such a way that during big loads or the like, the top plate and thus, the bracket arrangement, may be moved in the first horizontal direction and when this happens, the bracket arrangement may come in contact with the upper part, wherein the interaction between the upper part and the bracket arrangement may prevent further movement in the first horizontal direction.

The support device may further comprise a locking pin arranged through the upper part, wherein interaction between the bracket arrangement and the locking pin is configured to restrict rotational movement of the upper part.

The locking pin is configured to restrict movement in the vertical direction, i.e. the locking pin is configured to lock the upper part such that the upper part cannot provide a rotational movement relative to the lower part. Thus, the locking pin is configured to prevent rotation of the upper part. However, if the upper part may rotate unintentionally, i.e. as a response to vibrations or the like, the locking pin is arranged in such a way that it will come in contact with the bracket arrangement, wherein the interaction between the locking pin and the bracket arrangement may prevent any further rotation. Thus, as said, interaction between the bracket arrangement and the locking pin is configured to restrict rotation of the upper part. If there is a need to rotate the upper part, i.e. if the top plate should be moved in the vertical direction, one needs to remove the locking pin from the upper part before being able to rotate the upper part. The upper part may preferably be able to rotate 180 degrees at the time such that the locking pin may be able to be received by the upper part once finished with the movement. This is advantageous in that a flexible and secure control structure is provided which is configured to prevent rotation of the upper part. It should be noted that small rotations may be allowed prior to the locking pin coming in contact with the bracket arrangement.

The interaction between the bracket arrangement and the locking pin is further advantageous in that it provides a safety mechanism in the vertical direction, i.e. the bracket arrangement may not be able to be moved in the vertical direction once the locking pin is arranged in the upper part because the locking pin may hit the bracket arrangement if the top plate is moved upwards in the vertical direction. Thus, the bracket arrangement may not be able to be moved past the locking pin. This is advantageous in that it keeps the top plate in place, i.e. prevents the top plate from falling off the upper part due to vibrations or the like. It should be noted that small movements in the vertical direction may be allowed prior to the locking pin coming in contact with the bracket arrangement.

Preferably, the locking pin itself, and the interaction between the locking pin and the bracket arrangement prevents rotation and movement upwards, in the vertical direction, due to vibrations or the like.

The bracket arrangement may comprise an arc shaped bracket configured to be attached to the top plate at a first and second end thereof. With this design, a central portion of the bracket arrangement may form a downward portion configured to extend down over an outer surface of the upper part. The downward portion of the bracket arrangement is typically smaller than a height of the upper part. This is advantageous in that the upper part is surrounded by the bracket arrangement along its circumference, wherein the upper part extends through the bracket arrangement. Thereby, the bracket arrangement is configured to control movement of the top plate in the first horizontal direction and in a second horizontal direction.

An outer surface of the upper part and the bracket arrangement may define a clearance therebetween to enable movement in the first horizontal direction. The clearance may be a horizontal clearance having an extension in the first horizontal direction. With this design, the clearance enables movement in the first horizontal direction at the same time as it prevents too large movements in the first horizontal direction. This is advantageous in that the movement in the first horizontal direction may be controlled in a flexible and accurate way. Thus, the clearance between the outer surface of the upper part and the bracket arrangement may define a distance which the top plate may be allowed to be moved in the first horizontal direction. The outer surface of the upper part and the bracket arrangement may define a clearance therebetween to enable movement in a first horizontal direction. The clearance may be a horizontal clearance having an extension in the second horizontal direction.

The clearance defined between the outer surface of the upper part and the bracket arrangement may extend along an entire circumference of the outer surface of the upper part to enable movement in the first horizontal direction and in a second horizontal direction. With this design, the clearance enables movement in the first horizontal direction and in the second horizontal direction at the same time as it prevents too large movements in these directions. This is advantageous in that movements in the first horizontal direction and in the second horizontal direction may be controlled in a flexible and efficient way. Thus, the clearance between the outer surface of the upper part and the bracket arrangement may define a distance which the top plate may be allowed to be moved in the first horizontal direction and in the second horizontal direction. It should be noted that with this design, the clearance may enable movement in all horizontal directions.

The clearance defined between the upper part and the bracket arrangement may be larger than the horizontal clearance defined between the base element and the connection bar and/or the top element and the connection bar. This is advantageous in that the interaction between the bracket arrangement and the locking pin, which, as said, is the stronger structure of the two, has a greater tolerance to movements in the first horizontal direction than the interaction between the respective element and the connection bar.

The connection bar may be pivotably connected to the base element and the top element via a respective connection pin. The connection bar may be configured to pivot about the respective connection pin. This is advantageous such that movement in the vertical direction may be possible. Thus, when the intermediate structure moves the top plate in the vertical direction, the top element has to follow the top plate in the vertical direction because the top element is attached to the top plate. At the same time, the base element which is attached to the base plate cannot follow the top plate in the vertical direction. This is further advantageous in that it allows the base element and the top element to have a misalignment between each other.

When the top plate is in an initial position, the connection bar may be arranged substantially parallel with the second horizontal direction. This is advantageous as it allows the top plate to be moved upward and downward in the vertical direction in response to the rotational movement of the upper part relative to the lower part. Thus, when the top plate is in the initial position, the upper part may be positioned at the half height of the threads and is configured to be moved a quarter of the heights of the threads upwards and a quarter of the height of the threads downwards relative the initial position.

A connection between the base element and the connection bar and/or the top element and the connection bar may comprise an opening which has at least one first section having a diameter which is larger than a diameter of the respective connection pin to enable movement in the first horizontal direction. Each of the base and top elements may comprise one or more holes and the connection bar may comprise a first hole on a first end thereof and a second hole on a second end thereof. Each hole of the connection bar may coincide with one or more holes of the respective element for connecting the connection bar to the base element and the top element via the respective connection pin. The hole of the connection bar and the corresponding two or more holes of the respective element may together form the opening of the connection between the connection bar and the respective element. If there is a clearance defined between the base element and the connection bar and/or between the top element and the connection bar, this/these clearance(s) may also be part of the formed opening.

The opening may have at least one second section having a diameter which is more narrow that the diameter of the at least one first section of the opening. This is advantageous in that it allows to fix the respective element and the connection bar to each other while still enabling the movement in the first horizontal direction.

The lower part may be attached to the base plate at a central portion thereof and wherein a central portion of the top plate may be freely arranged on the upper part, thereby the lower and upper parts extend along a center axis of the support device between the base plate and the top plate. This is advantageous in that a strong and stable device is provided.

The base element, the top element and the connection bar may extend within an off-center plane which is parallel with and off-set the center axis, and wherein the base element and the top element are spaced from each other as seen in the second horizontal direction. The base element and the top element may be, as seen in the second horizontal direction, arranged at opposite sides of the center axis within the off-center plane.

Still other objectives, features, aspects and advantages will appear from the following detailed description as well as from the drawings.

### Drawings

Embodiments will now be described, by way of example, with reference to the accompanying schematic drawings, in which
Fig. 1 is a perspective view of a support device for processing equipment.
Fig. 2 is a first side view of a support device for processing equipment.
Fig. 3A is a second side view of a support device for processing equipment.
Fig. 3B is a detailed view of a connection between a base element and a connection bar of a support device.
Fig. 4 is a top view of a support device for processing equipment.
Fig. 5 is a further perspective view of a support device for processing equipment.
Fig. 6 is a yet further perspective view of a support device for processing equipment.
Fig. 7 is a side view of a processing equipment supported by two support devices.

### Description

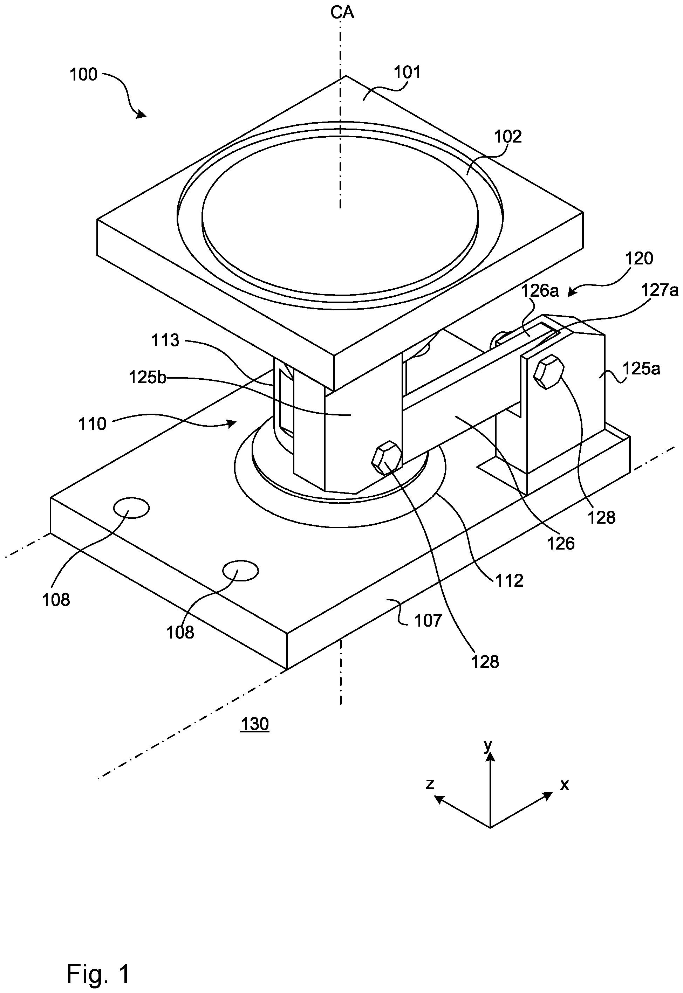

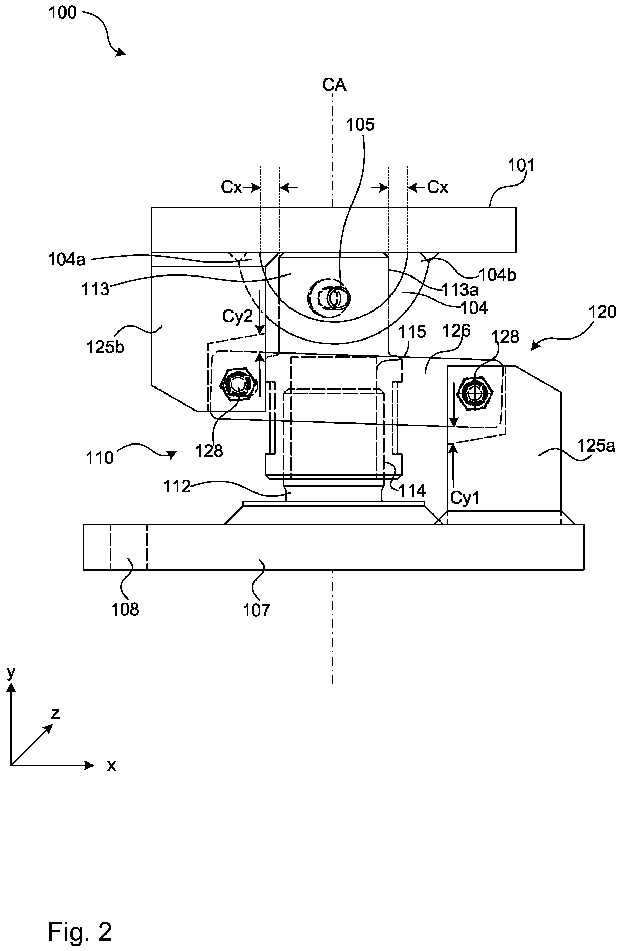

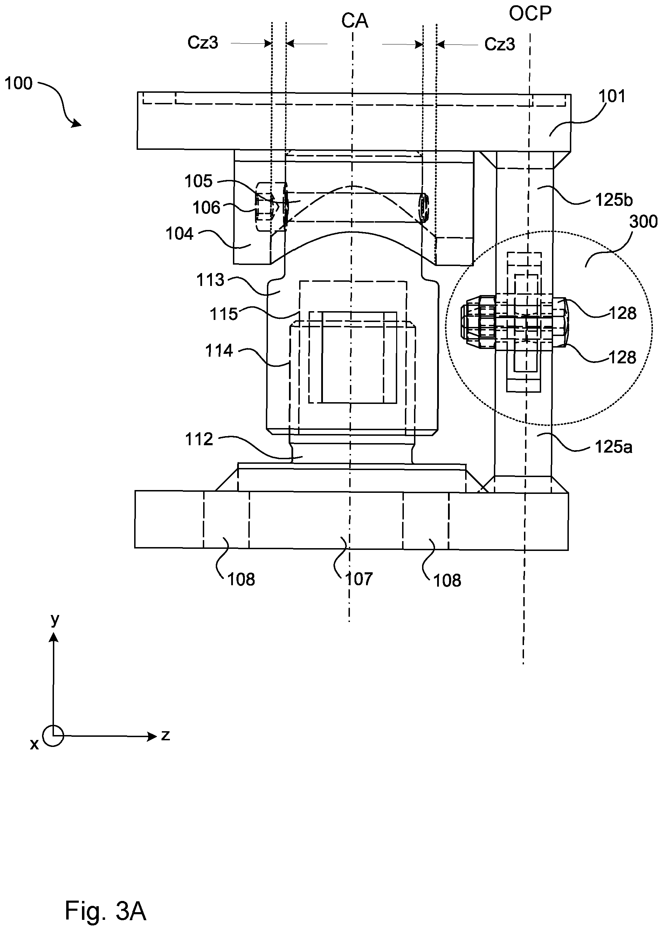

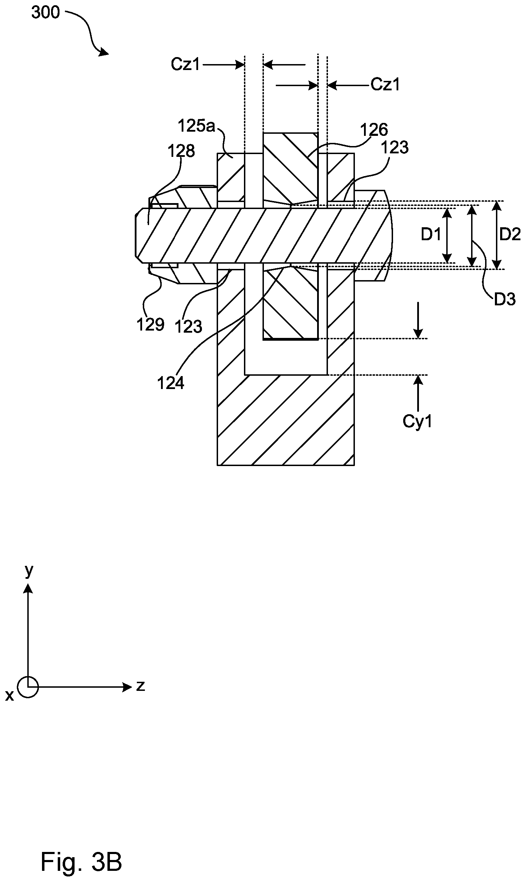

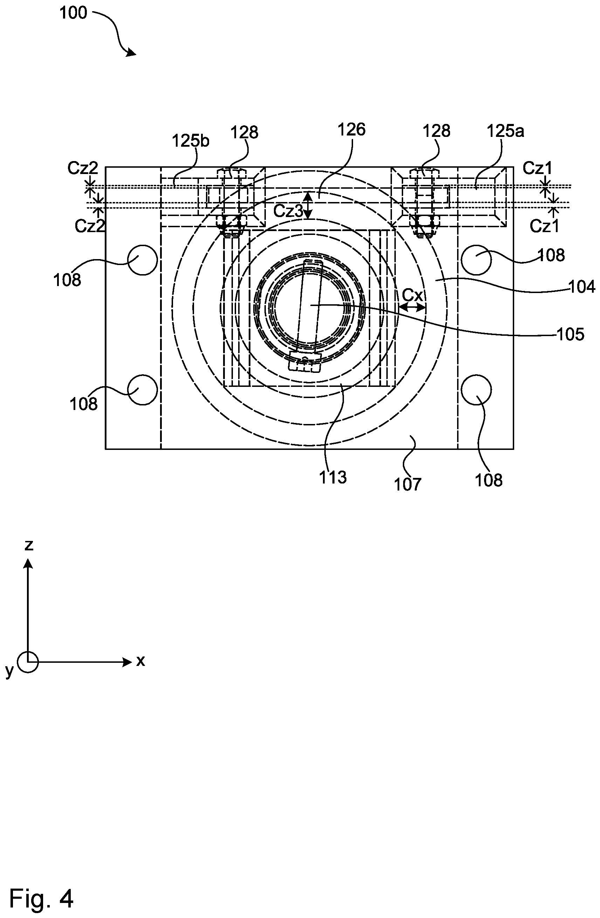

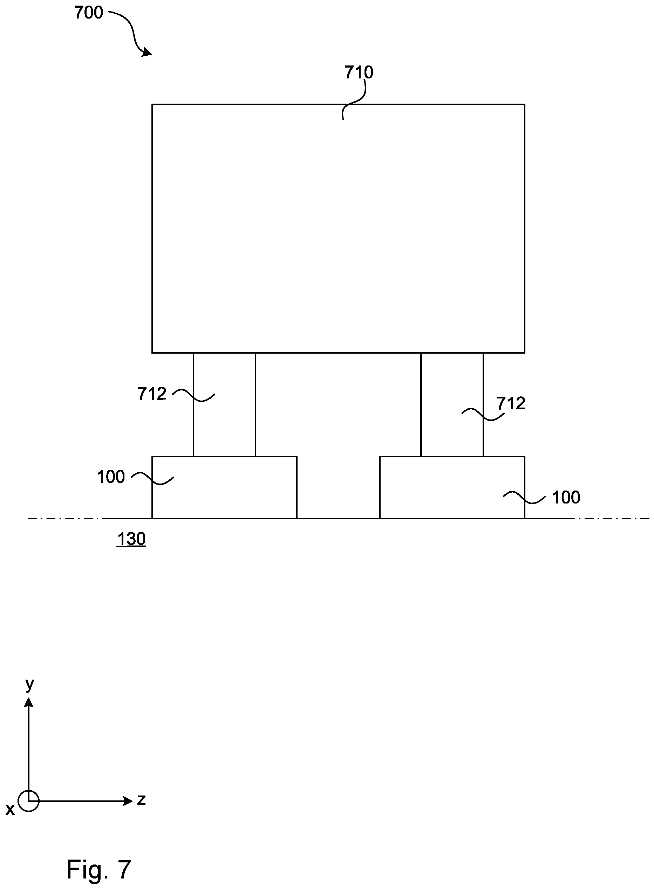

With reference to Figs 1, 5 and 6, a support device 100 is illustrated in different perspective views by way of example. With reference to Fig. 2, a first side view of the support device 100 is illustrated by way of example. With reference to Fig. 3A, a second side view of the support device 100 is illustrated by way of example. With reference to Fig. 3B, a detailed view of a connection 300 between a base element 125a and a connection bar 126 of the support device 100 is illustrated by way of example. With reference to Fig.4, a top view of the support device 100 is illustrated by way of example. With reference to Fig. 7, an arrangement 700 which comprises a processing equipment 712 supported by two support devices 100 as illustrated in Figs 1-6 is illustrated by way of example. Throughout the figures, each figure comprises a cartesian coordinate system in order to indicate in what view the support device 100 is illustrated.

As best illustrated in Fig. 7, the support device 100 is configured to support the processing equipment 712. The processing equipment 710 comprises two feet 712, wherein each foot 712 is configured to be arranged at a respective support device 100. It should however be noted that the processing equipment 710 may comprise any number of feet and thus be supported by any number of support devices 100. It should be noted that that the support device 100 may be configured to support the processing equipment 712 although the processing equipment 712 is designed without any feet.

Referring back to Fig. 1, the support device 100 comprises a base plate 107 and a top plate 101. The base plate 107 is attached to the ground 130. The base plate 107 comprises bolt holes 108 and is preferably fixedly attached to the ground 130 by introducing bolts in the bolt holes 108. The top plate 101 is configured to support the processing equipment 710. The top plate 101 comprises a track 102 for receiving the foot 712 of the processing equipment 710. However, it should be noted that the track 102 may be excluded as well. The support device 100 further comprises an intermediate structure 110 and a connector structure 120.

The intermediate structure 110 has a lower part 112 and an upper part 113. The intermediate structure 110 extends between the base plate 107 and the top plate 101. The lower part 112 is attached to the base plate 107 at a first end thereof. Preferably, the lower part 112 is fixedly attached to the base plate 107, i.e. the lower plate 112 may be bolted or welded to the base plate 107. The base plate 107 and the lower part 112 may be formed as one single unit. The top plate 101 is freely arranged on the upper part 113. The lower part 112 is attached to the base pate 107 at a central portion thereof and a central portion of the top plate 101 is freely arranged on the upper part 113. Thereby, the lower part 112 and the upper part 113 extend along a center axis CA of the support device 100 between the base plate 107 and the top plate 101. As best illustrated in Fig. 2, the lower part 112 and the upper part 113 are connected via threads 114, 115. The lower part 112 comprises external threads 114 and the upper part 113 comprises internal threads 115. The intermediate structure 110 is configured to move the upper plate 101 in a vertical direction y in response to rotational movement of the upper part 113 relative the lower part 112. Thus, the top plate 101 is moved in the vertical direction y in response to that the rotational movement is converted to linear movement.

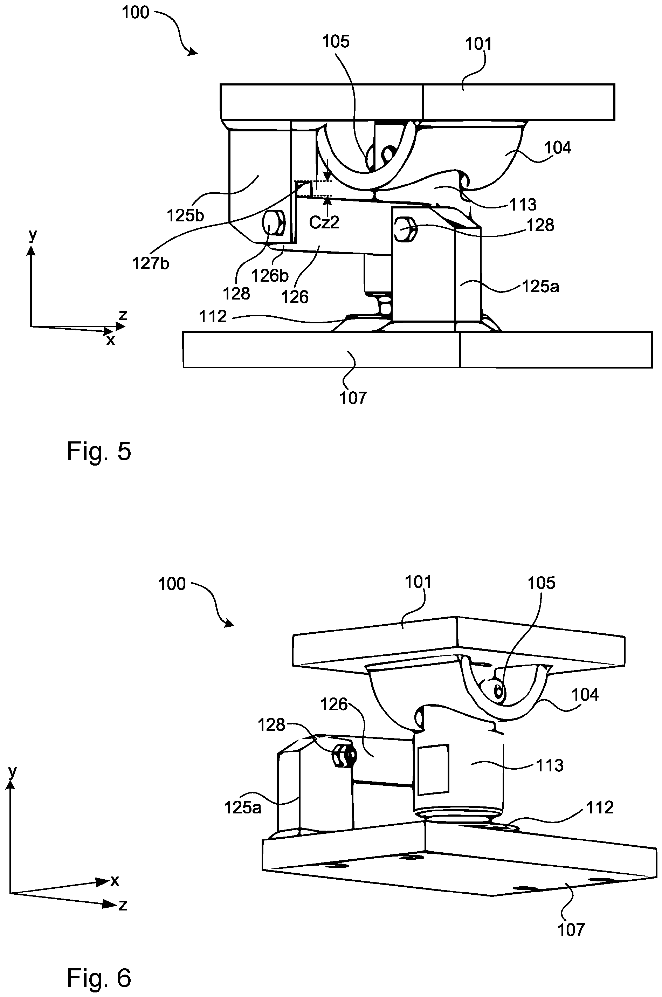

Referring back to Fig. 1, the connector structure 120 comprises a base element 125a, a top element 125b and a connection bar 126. The connector structure 120 extends between the base plate 107 and the top plate 101. The base element 125a is attached to the base plate 107. Preferably, the base element 125a is fixedly attached to the base plate 107, i.e. the base element 125a may be bolted or welded to the base plate 107. The top element 125b is attached to the top plate 101. Preferably, the top element 125b is fixedly attached to the top plate 101, i.e. the top element 125b may be bolted or welded to the top plate 125b. The connection bar 126 is connected to and extending between the base plate 125a and the top plate 125b. The connector bar 126 is pivotably connected to the respective element 125a, 125b via a respective connection pin 128. As depicted in Fig. 1, the base element 125a comprises a recess 127a in which a first end 126a of the connection bar 126 is received. As best illustrated in Fig. 5, the top element 125b comprises a recess 127b in which a second end 126b of the connection bar 126 is received. As best illustrated in Fig. 2, the base element 125a and the connection bar 126 define a vertical clearance Cy1 therebetween. As best illustrated in Figs 2 and 5, the top element 125b and the connection bar 126 define a vertical clearance Cy2 therebetween. The vertical clearances Cy1, Cy2 defined between the respective element 125a, 125b and the connection bar 126 enable the connection bar 126 to pivot about the respective connection pin 128 and thus enable movement of the top plate 101 in the vertical direction y. Hence, when the intermediate structure 110 moves the top plate 101 is the vertical direction y, the top element 125a follows the movement because the top element 125b is attached to the top plate 101.

Throughout the figures, the support device 100 is illustrated in an initial position and as depicted, the connection bar 126 is arranged substantially parallel with a second horizontal direction x. The connection bar 126 is configured to pivot clockwise or counter-clockwise about the respective locking pin 128 in response to that the top plate 101 is moved in the vertical direction y in response to rotational movement of the upper part 113 relative the lower part 112.

As best illustrated in Fig. 3A, the base element 125a, the top element 125b and the connection bar 126 extend within an off-center plane OCP which is parallel with and off-set the center axis CA. As best illustrated in Fig. 2, the base element 125a and the top element 125b are, as seen in a second horizontal direction x, spaced from each other. The base element 125a and the top element 125b are arranged on opposite sides of the center axis CA. The connection bar 126 is configured to pivot within the off-set plane OCP about the respective connection pin 128. The connector structure 120 is configured to enable movement in a first horizontal direction z. Preferably, the connector structure 120 is configured to enable movement in the first horizontal direction by a distance in the range of 2-8 mm. As best illustrated in Fig. 4, the base element 125a and the connection bar 126 define a horizontal clearance Cz1 therebetween. The top element 125b and the connection bar 126 define a horizontal clearance Cz2 therebetween. As depicted in Fig. 4, the respective element 125a, 125b and the connection bar 126 define a clearance on respective side of the connection bar 126. The defined clearances Cz1, Cz2 enable the movement of the top plate 101 in the first horizontal direction z.

With reference to Fig. 3B, a detailed view of a connection 300 between the base element 125a and the connection bar 126 is illustrated by way of example. The base element 125a comprise two holes 123 and the connection bar 126 comprises one hole 124 at the first end 126a thereof. The hole 124 of the connection bar 126 coincides with the two holes 123 of the base element 125a for connecting the connection bar 126 to the base element 125a via the connection pin 128. Thus, the connection pin 128 is received through the holes 123, 124 and preferably fastened by a nut 129. The holes 123, 124 and the clearance Cz1 together form an opening through which the connection pin 128 is received. Although not illustrated, the connection bar 126 comprises a similar hole as the depicted hole 123 on the second end 126b thereof which preferably coincides with two holes of the top element 125b for connecting the connection bar 126 to the top element 125b.

The connection pin 128 has a diameter D1. The holes 123 through the base plate have a diameter D2, wherein D2 is larger than D1. The hole 124 through the connection bar 126 has a varying diameter, wherein at least one section of the diameter has a diameter D3, wherein D3 is smaller than D2 but larger than D1. In other words, the connection 300 between the base element 125a and the connection bar 126 has the opening, wherein at least a first section of the opening has a diameter D2 which is larger than the diameter D1 of the respective connection pin 128. The opening has at least a second section which has a narrower diameter D3 than the diameter D2 of the at least one first section of the opening. The hole 124 of the connection pin may take form of an hour-glass design, wherein the diameter D3 preferably is the smallest diameter of the hole 124. With this design, wherein the at least one first section of the opening has a diameter D2 which is larger than the diameter D1 of the connection pin 128 enables movement in the first horizontal direction z. With this design, wherein the opening has at least one second section having the diameter D3 which is narrower that the diameter D2 of the at least one first section of the opening enables fixing the element 125a, 125b and the connection bar 126 to each other at the same time as it enables movement in the first horizontal direction z.

With reference to Figs 2, 5 and 6, the support device 100 comprises a bracket arrangement 104. The bracket arrangement 104 comprises an arc shaped bracket which is attached to the top plate 101 at a first and a second end thereof 104a, 104b. The bracket arrangement 104 is preferably fixedly attached to the top plate 101, i.e. the bracket arrangement 104 may be welded or bolted to the top plate 101. The upper part 113 extend through the bracket arrangement 104, thus, the bracket arrangement 104 surrounds at least a portion of the upper part 113 in the vertical direction y. As depicted, a central portion of the bracket arrangement 104 forms a downward portion extending down over an outer surface 113a of the upper part. The downward portion of the bracket arrangement 104 is typically smaller than a height of the upper part 113 as seen in the vertical direction y.

As best illustrated in Fig. 3A, the outer surface 113a of the upper part 113 and the bracket arrangement 104 define a clearance Cz3 therebetween to enable movement in the first horizontal direction z. As best illustrated in Fig. 2, the outer surface 113a of the upper part 113 and the bracket arrangement 104 define a clearance Cx therebetween to enable movement in the second horizontal direction x. As best illustrated in Fig. 4, the clearance Cz3, Cx defined between the outer surface 113a of the upper part 113 and the bracket arrangement 104 typically extends along an entire circumference of the outer surface 113a of the upper part 113 to at least enable movement in the first horizontal direction z and in the second horizontal direction x. The clearance defined along the entire circumference of the outer surface 113a of the upper part 113 preferably enable movement in all horizontal directions.

The support device 100 further comprises a locking pin 105. The locking pin 105 is arranged through the upper part 113. The locking pin 105 has a section 106 that is arranged to come into contact with the bracket arrangement 104 upon rotation of the upper part 113. To accomplish this, the section 106 protrudes out from a side of the upper part 113, at approximately the same vertical height as the vertical center of the bracket arrangement 104. This prevents further rotational movement of the upper part 113 relative the bracket arrangement 104, which hence prevents the top plate 101 from being lifted or lowered. An interaction between the bracket arrangement 104 and the locking pin 105 is configured to restrict rotational movement of the upper part 113. Thus, if the upper part 113 should be rotated relative to the lower part 112, the locking pin 105 has to be removed from the upper part 113 otherwise the locking pin 105 will come in contact with the bracket arrangement 104 and will thus prevent the rotation. Also, if the top plate 101 is lifted in relation to the upper part 113, i.e. if one tries to form a gap between the top plate 101 and the upper part 113 in the vertical direction y, the locking pin 105 will come in contact with the bracket arrangement 104 and will thus prevent further movement of the top plate 101 in the vertical direction y, as long as the locking pin 105 is arranged in the upper part 113 and as long as the movement is not initiated by the upper part 113.

To sum up, the intermediate structure 120 enables movement of the top plate 101 in the vertical direction y. The interaction between the bracket arrangement 104 and the locking pin 105 is configured to control the movement in the vertical direction y.

The connector structure 120 enables movement in the first horizontal direction z. More particularly, the connection 300 between the respective element 125a, 125b and the connection bar 126 enables movement in the first horizontal direction z. Even more particularly, the clearances Cz1, Cz2 between the respective element 125a, 125b and the connection bar 126 and the design of the opening enable movement in the first horizontal direction. The interaction between the bracket arrangement 104 and the locking pin 105 is configured to control the movement in the first horizontal direction z and in the second horizontal direction x.

With this design, a device which provides both structural flexibility as well as level flexibility is achieved. There is also provided a device which is both robust and easy to install.

From the description above follows that, although various embodiments of the invention have been described and shown, the invention is not restricted thereto, but may also be embodied in other ways within the scope of the subject-matter defined in the following claims.

## Claims

1. A support device (100) for supporting a processing equipment (712), the support device (100) comprising:
a base plate (107) configured to be attached to a ground (130);
a top plate (101) configured to support the processing equipment (712);
an intermediate structure (110) having a lower part (112) and an upper part (113) and extending between the base plate (107) and the top plate (101), wherein the lower part (112) is attached to the base plate (107) at a first end thereof and is connected to the upper part (113) via threads (114, 115) at a second end thereof, wherein the top plate (101) is freely arranged on the upper part (113), and wherein the intermediate structure (110) is configured to move the top plate (101) in a vertical direction (y) in response to rotational movement of the upper part (113) relative the lower part (112); and
a connector structure (120) having a base element (125a), a top element (125b) and a connection bar (126) and extending between the base plate (107) and the top plate (101), wherein the base element (125a) is attached to the base plate (107), the top element (125b) is attached to the top plate (101) and the connection bar (126) is connected to and extending between the base element (125a) and the top element (125b), and wherein the connector structure (120) is configured to enable movement of the top plate (101) in a first horizontal direction (z).

2. The support device (100) according to claim 1, wherein the base element (125a) and the connection bar (126) define a horizontal clearance (Cz1) therebetween and/or wherein the top element (125b) and the connection bar (126) define a horizontal clearance (Cz2) therebetween to enable movement of the top plate (101) in the first horizontal direction (z).

3. The support device (100) according to claim 1 or 2, wherein the connector structure (120) is configured to enable movement of the top plate (101) in the first horizontal direction (z) by a distance within the range of 2-8 mm.

4. The support device (100) according to any one of the preceding claims, further comprising a bracket arrangement (104) attached to the top plate (101), wherein the upper part (113) extends through the bracket arrangement (104).

5. The support device (100) according to claim 4, further comprising a locking pin (105) arranged through the upper part (113), the locking pin (105) comprising a section (#) that is arranged to come into contact with the bracket arrangement (104) upon rotation of the upper part (113), to thereby restrict further rotational movement of the upper part (113).

6. The support device (100) according to claim 4 or 5, wherein the bracket arrangement (104) comprises an arc shaped bracket that is attached to an underside of the top plate (101).

7. The support device (100) according to any one of claims 4 to 6, wherein an outer surface (113a) of the upper part (113) and the bracket arrangement (104) define a clearance (Cz3) therebetween to enable movement in the first horizontal direction (z).

8. The support device (100) according to claim 7, wherein the clearance (Cz3) defined between the outer surface (113a) of the upper part (113) and the bracket arrangement (104) extends along an entire circumference of the outer surface (113a) of the upper part (113) to enable movement in the first horizontal direction (z) and in a second horizontal direction (x).

9. The support device (100) according to claim 7 or 8, wherein the clearance (Cz3) defined between the upper part (113) and the bracket arrangement (104) is larger than the horizontal clearance (Cz1, Cz2) defined between the base element (125a) and the connection bar (126) and/or the top element (125b) and the connection bar (126).

10. The support device (100) according to any one of the preceding claims, wherein the connection bar (126) is pivotably connected to the base element (125a) and the top element (125b) via a respective connection pin (128).

11. The support device (100) according to claim any one of the preceding claims, wherein, when the top plate (101) is in an initial position, the connection bar (126) being arranged substantially parallel with the second horizontal direction (x).

12. The support device (100) according to claim 10 or 11, wherein a connection between the base element (125a) and the connection bar (126) and/or the top element (125b) and the connection bar (126) comprises an opening which has at least one first section having a diameter (D2) which is larger than a diameter (D1) of the respective connection pin (128) to enable movement in the first horizontal direction (z).

13. The support device (100) according to claim 12, wherein the opening has at least one second section having a diameter (D3) which is narrower than the diameter (D2) of the at least one first section of the opening.

14. The support device (100) according to any one of the preceding claims, wherein the lower part (112) is attached to the base plate (107) at a central portion thereof and wherein a central portion of the top plate (101) is freely arranged on the upper part (113), thereby the lower and upper parts (112, 113) extend along a center axis (CA) of the support device (100) between the base plate (107) and the top plate (101).

15. The support device (100) according to claim 14, wherein the base element (125a), the top element (125b) and the connection bar (126) extend within an off-center plane (OCP) which is parallel with and off-set the center axis (CA), and wherein the base element (125a) and the top element (125b) are spaced from each other as seen in the second horizontal direction (x).
